# EUROPEAN PATENT SPECIFICATION

(11) **EP 0 739 514 B1**
(45) Date of publication and mention of the grant of the patent: **08.08.2001**
(21) Application number: 95907959.1
(22) Date of filing: 27.12.1994
(51) Int. Cl.: G06F 13/00

(54) **FILE TRANSFER METHOD AND APPARATUS USING HASH NUMBERS**
DATENÜBERTRAGUNGSVERFAHREN UND -VORRICHTUNG, DIE HASH-ZAHLEN VERWENDEN
PROCEDE ET DISPOSITIF DE TRANSFERT DE FICHIERS AU MOYEN DE NOMBRES DE HACHAGE

(30) Priority: 03.01.1994 US 176955
(43) Date of publication of application: 30.10.1996
(73) Proprietor: NORTON-LAMBERT CORP., Santa Barbara, CA 93140 (US)
(72) Inventor: HARLAN, Jim, Southfield, MI 48034 (US); THOMAS, Henry, Edward, Ypsilanti, MI 48197 (US)
(74) Representative: Sparing Röhl Henseler Patentanwälte
(86) International application number: US9414969
(87) International publication number: WO9519003

(56) References cited:
- EP-A- 0 541 281
- WO-A-91/02313
- WO-A-94/23337
- US-A- 4 641 274
- US-A- 4 701 745

## Description

The present invention relates to a method of and a system for transferring a particular string of bytes from a first computer to a second computer according to the preamble of claims 1 and 9, respectively.

There are a wide variety of commercially available computer programs which facilitate transferring files between computers utilizing modems and telephone lines. Among such commercially available programs are: "Crosstalk" marketed by DCA Corp of Atlanta, Georgia; "QModem" marketed by Forgin Inc. of Cedar Falls Iowa; and, "Close-Up", marketed by Norton Lambert Corp of Santa Barbara, CA.

The physical characteristics of normal telephone lines limit the transmission speed which can be used to transmit data over such lines. In order to shorten the time required to transmit data, various data compression and error correcting protocols are in widespread use.

It is known from EP-A-0541281 that when a file on a particular computer is being updated, the transmission time can be shorted by merely transmitting information which relates to the "differences" or the "delta" between the present file and the previously transmitted file. The technique of only transmitting the delta between two files is only applicable in situations where the sending system knows the state of the file at the receiving station.

The present invention provides a technique for rapidly transmitting files between computers where the computer receiving the information has a file stored thereon, but where the sending computer does not know the state (i.e. the exact contents) of the file at the receiving computer.

The invention is defined in claims 1 and 9.

The present invention facilitates the transmission of a file (hereinafter referred to as the new file) from a first computer to a second computer, in a situation where the second computer has a file (hereinafter referred to as the old file) but where the first computer does not know the status or content of the old file. With the present invention, as a preliminary step, the second computer divides the old file into segments, and calculates a hash number for each segment. The second computer transmits these hash numbers to the first computer. The first computer examines each possible segment in the new file to determine which if any segments in the new file have hash numbers which correspond to the hash numbers received from the second computer (such segments are hereinafter called matching segments). The first computer sends to the second computer those bytes from the new file that are not part of any matching segment and an indication of which matching segments fit into the new file. The second computer constructs copy of the new file from the bytes received and from the matching segments in the old file.

Figure 1 is an overall block diagram of the computer systems.

Figure 2 is a block diagram of the actions that take place at the receiving computer.

Figure 3A is an example of a Segment Profile Table.

Figure 3B is a table giving an example of information transmitted by the sending computer.

Figure 4 is a block diagram of the actions that take place at the sending computer.

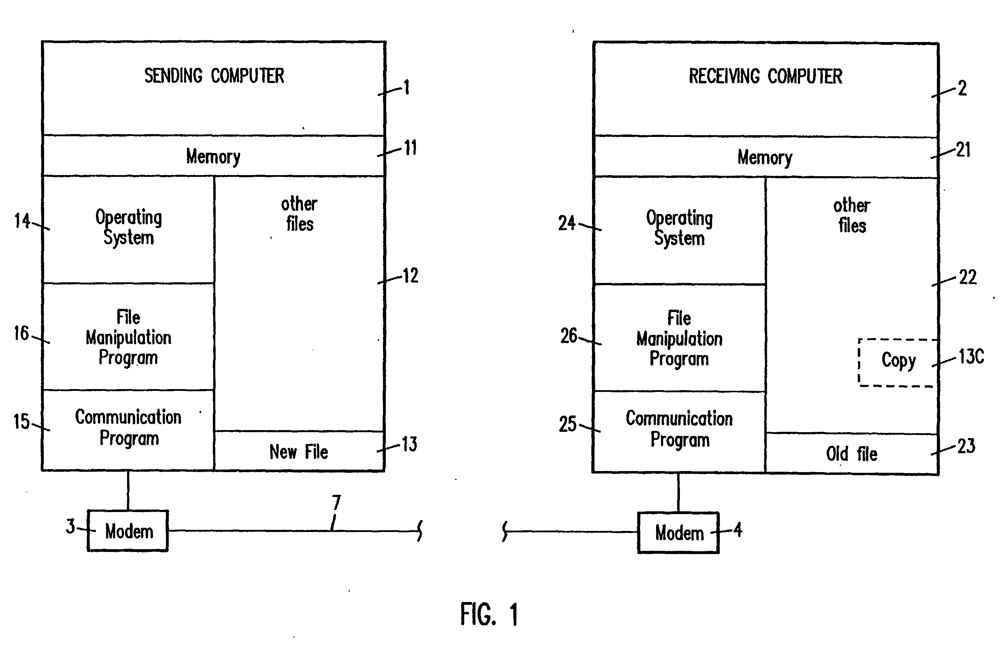

Two interconnected computers that can be used to practice the invention are shown in Figure 1. A sending computer 1 is connected to a receiving computer 2 via modems 3 and 4 and a telephone line 7. A new file 13, is stored in computer 1. The preferred embodiment of the invention described herein can be used to transfer a copy of file 13 from computer 1 to computer 2. The copy of the file 13 which resides in computer 2 after the transfer operation is designated 13C. It is shown in dotted lines in Figure 1 since it is only present in computer 2 after the transfer operation is complete.

Computer 1 has a conventional internal RAM memory 11 which has stored therein a number of programs and files. It is noted that while various programs and files are shown as being in the RAM memory 11 of computer 1, a substantial part of these programs and files could alternatively be stored on other types conventional storage devices such as on magnetic disks. How the various programs and files are stored is not particularly relevant to the present invention and it can be in any conventional manner.

As shown in Figure 1, the computer memory 11 includes an operating system 14, a communication program 15, a file manipulation program 16, a new file 13 and other files 12. The operating system 14 can for example be the DOS (TM) operating system that is marketed by Microsoft Corporation and the communications program 15 can be a conventional communication program for a DOS type of computer. The new file 13 is the file which computer 1 will transferred to computer 2 utilizing the present invention. It is noted that as used herein the term "transferring a file" should be understood as synonymous with the more precise terms "transferring a copy of a file". Furthermore as will be explained hereinafter in alternative embodiments of the invention, the "file" being transferred may merely be a designated string of bytes and not a complete file in the sense that a DOS file is a complete file.

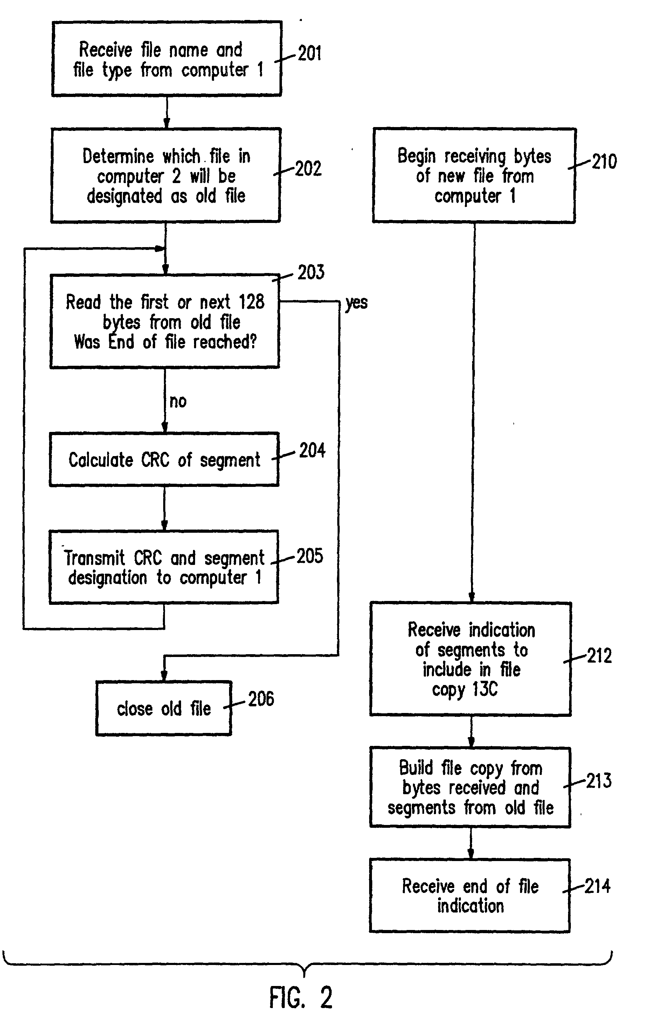

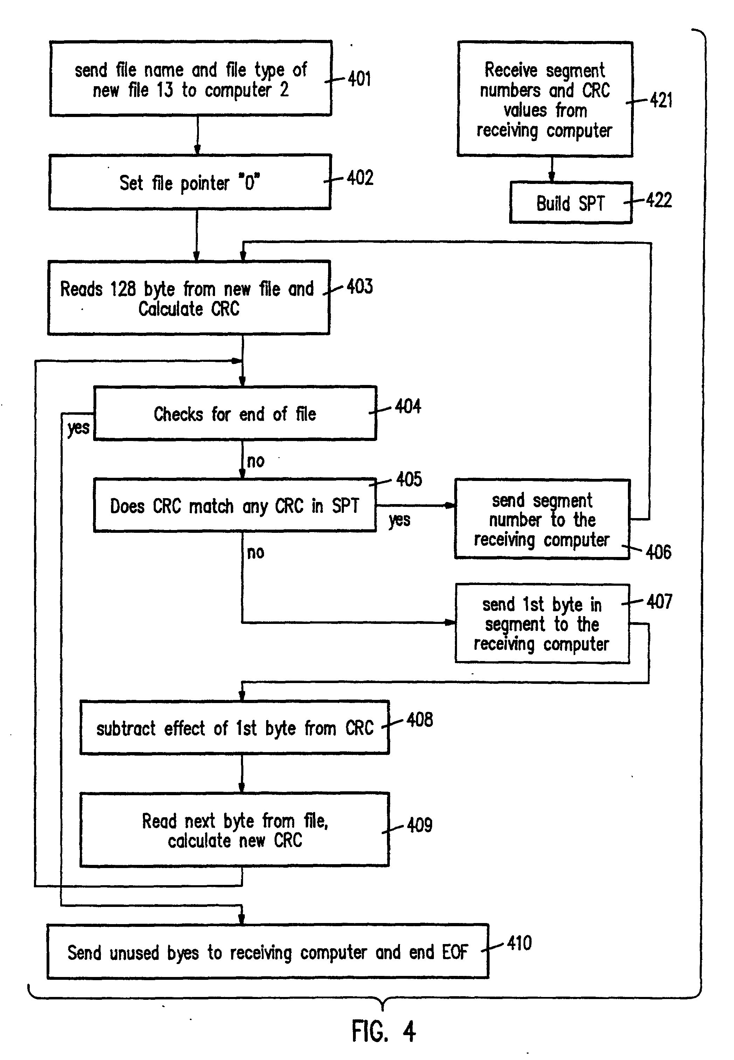

The file manipulation program 16, and related program 26 in computer 2, are the programs which implement the main parts of the present invention as hereinafter described. The operations performed by these programs are shown in block diagram form in Figures 2 and 4.

The computer 2 is substantially identical to the computer 1 and the components in computer 2, other than the files, are identical. Computer 2 includes memory 21, operating system 24, file manipulation program 26, communication program 25 and a file designated "old file" 23.

It is noted that new file 13, and old file 23, are merely illustrative of files that are typically stored on personal computers and work stations. Typically a computer will have many stored files and often the user of a computer has a desire and need to transfer a file to another computer. There are many existing programs and protocols designed for this purpose. Many of these protocols involve various types of compression.

Conventional communication programs 15 and 25 may or may not use the conventional type of compression techniques for transmitting data. The present invention relates to the particular information which is transmitted in order to transmit a complete file. The actual transmission mechanism for transmitting the information may be conventional.

The present invention takes a new and different approach to the file transfer task. The present invention recognizes and takes advantage of the fact that many times when a file is being transferred from a first computer to a second computer, there are files stored at the second computer that are related in some way to the file that is being transmitted. For example, new file 13 may be a updated version of the old file 23. Alternatively, the new file 13 may be a file in the format of a particular word processor document such a WordPerfect. The document may for example be a contract. The old file 23 may be a WordPerfect document where the document in file 23 may be an unrelated contract. The present invention takes advantage of the fact that such seemingly unrelated files may contain a substantial number of identical strings of bytes. For example, some of the similar bytes may be formatting information, others similar bytes may be type fonts, others similar bytes may be similar phrases that appear in the two documents, etc. With the present invention similarities between a new file (i.e. the file being transmitted) and a document at the receiving computer are detected and used to speed the transmission of the new file.

The present invention also takes advantage that present day modems 3 and 4 can operate in a full duplex mode where information is transferred simultaneously in two directions. The present invention utilizes bidirectional transfer of information between computers to speed the transfer of information in one direction.

The preferred embodiment described herein performs the following major steps in order to transfer a copy of new file 13 from computer 1 to computer 2.
a) A file stored on computer 2 is selected for designation as old file 23.
b) Computer 2 divides the old file 23 into 128 byte segments and calculates a hash number (e.g. a CRC number) for each 128 byte segment of the old file 23.
c) Computer 2 sends to computer 1 the hash numbers for the segments of file 23. Computer 1 stores these hash numbers in a Segment Profile Table (SPT).
d) Computer 1 calculates hash numbers for each possible segment in the new file 13 and compares these hash numbers to the hash numbers it has received from computer 2. Segments in the new file which have hash numbers that correspond to the hash number of a segment in the old file are termed matching segments.
e) Bytes in the new file that are not part of any matching segment are transmitted from computer 1 to computer 2.
f) Matching segments are not transmitted from computer 1 to computer 2. Instead the computer 1 sends computer 2 an indication that a particular matching segment fits at a particular place in the file being constructed at computer 2. The location where the segments from the old file 23 fit into the copy 13C of the new file is evident from the sequence in which bytes from the new file and segment identifications are transmitted.
g) Computer 2 constructs a copy 13C of the new file 13 from the transmitted bytes and from matching segments copied from the old file.

At the beginning of the transmission process after a file on computer 2 has been designated as old file 23, computer 1 has an empty SPT. At this point computer 1 begins calculating the hash number of the first segment in new file 13. Since the SPT is empty the calculated hash numbers will not match any hash number in the SPT. Since no match is found, computer 1 sends the first byte in the first segment of file 13 to computer 2. A new byte from file 13 is then added to the segment and a new hash number calculated. The process repeats. At the same time that computer 1 is examining segments of new file 13, computer 23 is calculating hash numbers for segments in old file 23 and transmitting these values to computer 1 for storage in the SPT. As time progresses, the SPT will contain more and more entries and matches between hash numbers computer by computer 1 and information in the SPT will begin to occur. When computer 1 finds a matching segment (i.e. a segment that has a hash number that matches one of the hash numbers in the SPT), computer 1 merely sends computer 2 an indication that a match has been detected and that computer 2 should copy a particular segment from the old file into the new file. When computer 1 finds a matching segment and transmits this information to computer 2, computer 2 will insert the matching segment from the old file 23 immediately after the last byte that was received from computer 1. Thus the sequence information is received by computer 2 indicates where segments from the old file 23 should be inserted in the copy 13C of the new file.

Segments from old file 23 are identified in the SPT by the offset of the first byte in the segment. Thus when computer 1 sends to computer 2 the identification of a segment (i.e. the offset of the first byte of a segment) the computer 2 can identify which part of the old file 23 should be copied into the copy 13C of the new file 13 that is being constructed.

The type of hash number used in the preferred embodiment of the invention described herein is the well known cyclical redundancy check (CRC) number. The manner of calculating such numbers is well known. It is noted that while as described herein, the calculated CRC number is described as uniquely identifies a specific segment, as is well known, this is only correct in a practical sense and not in a strict mathematical sense. Errors can occur in that the same CRC can sometimes be calculated for two different segments. The number of such "errors" is so low as to be negligible and as described herein the CRC numbers are assumed to represent unique file segments. The number of possible duplications (i.e. errors) can be further reduced by using a longer CRC polynomial. As is well know, for computational efficiency, the length of the CRC is best chosen to match the size of the computer's registers. In situations where the length of the CRC is dictated by other considerations, two concatenated CRC numbers can be used to reduce the number of "errors". The manner of calculating CRC numbers is well known and forms no part of the present invention. Instead of using CRC numbers as hash numbers, the other well known types of hash numbers could be used.

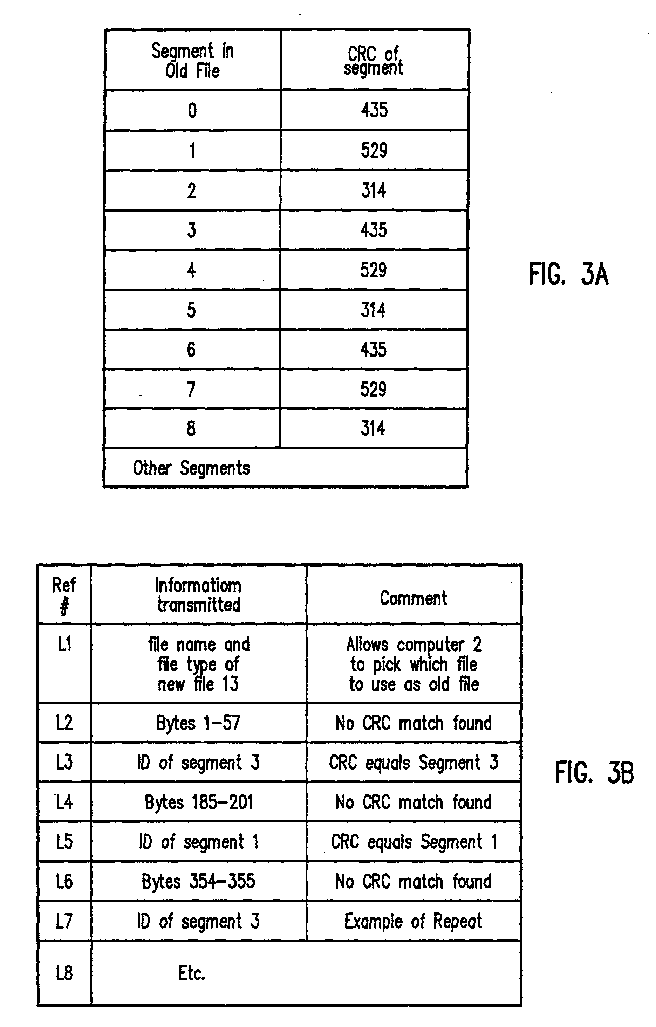

Each of the above major steps will now be explained in detail as will their purpose and how they are carried out. Figures 2 and 4 are program flow diagrams showing the operations that take place on computers 1 and 2. Figure 3A is a diagram showing the information stored in the SPT. Figure 3B is a table illustrating a representative sequence of information that is transmitted from computer 1 to computer 2.

It is noted that data can simultaneously flow in both directions over communication line 7 from modem 3 to modem 4 and from modem 4 to modem 3. That is line 7 operates in full duplex mode. Modems and communication programs that handle duplex communication are well known. The unique method and apparatus of the present invention takes advantage of the ability to transfer data in the reverse direction without slowing the transfer of data in the forward direction in order to speed the transfer of the file in the forward direction.

Two processes take place on receiving computer 2. First a CRC number is calculated for each segment in the old file. This first processes includes receiving the file name and file type of the new file from computer 1 and determining which file stored at computer 2 will be designated as the old file. Second, computer 2 receives bytes and segment identifications from computer 1 and a copy 13C of the new file 13 is constructed. As shown in Figure 2, the first process which takes place on computer 2 is indicated by blocks 201 to 206 and the second process is indicated by blocks 210 to 214.

At the initiation of a file transfer operation, computer 1 sends to computer 2, the file name and file type of the file which will be transmitted (block 201). Computer 2 selects a file (block 202) which will be used as old file 23 based upon the following priorities:
1) Same file name and file type. If no such file, then,
2) Same file type and same file name except for two characters. If no such file, then,
3) Same file type. If no such file, then,
4) Same file name. If no such file, then,
5) Longest available file.
It is noted that various alternative ways could also be used to identify which file on computer 2 will be designated as "old file" 23.

Next (block 203) the first 128 byte segment is read from the file designated as old file 23 and the CRC number for this segment is calculated (block 204). The calculated CRC number is sent to computer 1 (block 205). It is noted that as computer 1 receives a sequence of CRC numbers, the offset of the beginning of the segment used to calculate each CRC number is merely the offset of the segment used to calculate the previous number increased by 128. The operations in block 203, 204 and 205 repeat until the end of file is detected at which time the old file is closed (block 206). The operations indicated by blocks 203, 204 and 205, in effect divide the old file 23 into segments, each 128 bytes long, a CRC is calculated for each of these segments, and the CRC values are transmitted to computer 1.

At the same time the operations indicated by blocks 202 to 206 are taking place, computer 2 is receiving information from computer 1. This is indicated by block 210 to 214. Typical modern day computers can easily handle such multitasking on a time shared basis. Initially computer 1 sends computer 2 a series of bytes from the new file 13 (block 210). As the process progresses, identification of segments from old file 23 (block 212) will be received interspersed with bytes from new file 13. How this occurs will be explained later with reference to figures 3B and 4.

The receiving computer 2 builds the copy 13C of the new file 13 (block 213) from the bytes received from computer 1 and from segments from old file 23 (when it receives a segment identification). Finally an end of file indication is received (block 214) and the process is complete.

The CRC numbers that are sent from computer 2 to computer 1 are assembled in computer 1 in a Segment Profile Table (SPT) such as that shown in Figure 3A. It is noted that the numbers 0 to 8 shown in the first column of Figure 3A are shown in Figure 3A merely for convenience of illustration. In the actual SPT, since each segment is 128 bytes long, the segment identifications ind the actual SPT would be the offset of the beginning of each segment (i. e. the numbers 0 to 8 multiplied by 128).

The operations which take place at computer 1 are shown in Figure 4. As with the computer 2, two process proceed simultaneously (i.e. in a multitasking mode) at computer 1. First there is a calculating and sending operation indicated by blocks 401 to 410 and second there is the receiving operation indicated by blocks 421 and 422.

When a file transfer is initiated the first step (block 401) involves transferring the file name and file type of the new file 13 (i.e. the name of the file being transferred) from computer 1 to computer 2. Next a file pointer is set to "0" (block 402) and the first one hundred and twenty eight bytes are read from new file 13 and the CRC of this first segment is calculated (block 403). The CRC so calculated is compared to the CRC numbers in the SPT (block 405). When the operation begins, no CRC numbers will as of yet been received from computer 2 and the SPT will be empty, thus no match will be found. The first byte in the segment will therefore be sent to computer 2 (block 407), the effect of that one byte on the CRC is subtracted from the calculated CRC (block 408), the next byte read from the file, and a new CRC calculated (block 409). If the end of the file has not been reached (block 404), the new CRC will be compared to the contents of the SPT and the operation proceeds. If there is a match between the calculated CRC number and a CRC number in the SPT, the segment number of the file from the SPT will be sent to computer 2 (block 406) and an entirely new 128 byte segment will be read from the file (block 403).

The above process continues until an end of file indication is detected (block 404). When the end of file indication is detected, the bytes remaining (which could be up to 127 bytes) are sent to computer 2 (block 410).

As indicated by block 421, the computer 1 receives the CRC numbers calculated as indicated in Figure 2. Computer 1 uses these numbers (block 422) to build a Segment Profile Table (SPT) as indicated in Figure 3A.

An example of the sequence in which information is transmitted from computer 1 to computer 2 is given in Figure 3B. The reference numbers in the first column of figure 3B are merely for reference during the explanation of the table. The second column gives the information transmitted and the third column is merely an brief explanation to facilitate and understanding of Figure 3B.

As indicated by line L1, the first information transmitted from computer 1 to computer 2 is the file name and file type of the new file 13. This information is used by computer 2, to select a file which will be used as old file 23. Next in the example shown, bytes 1-57 of the file are transmitted. This indicates that for the particular file in question the first fifty seven times through the loop formed by blocks 403 to 405 in Figure 4, no matching CRC was found in the SPT. Next as indicated by line L3, block 405 in figure 4 determines that the segment of the new file being examined has the same CRC number as does segment 3 in the old file. Computer 1 merely sends to computer 2 an indication that after putting the first 57 bytes (i.e. line L2 from Figure 3B) into the file 13C, computer 2 should copy segment 3 from the old file 23 into the new file 13C. The process then proceeds through lines L4 to L7 etc. It is noted that line L7 in figure 3A shows that the same segment from the old file can be used more than once in constructing the new file 13C.

It is noted that the technique used to determine which file on computer 2 is designated as the old file is not particularly relevant to the present invention. Various techniques could be used as an alternative to that shown above. Naturally if the old file selected closely resembles the new file 13, less bytes and more segments identifications could be transmitted by computer 1 thereby reducing the transmission time.

It is also noted that the segments used in the above described preferred embodiment are 128 bytes long. Longer or shorter segments could be selected depending upon the particular nature of the files being transmitted. Furthermore the segment length could be made dependent on various factors such as whether there is a file in computer 2 with the same file name and file type as the file in the sending computer or the file type of the file begin transferred.

In the above described preferred embodiment, the information in the SPT is only used to transmit one file, herein designated new file 13. It is noted that the SPT from each transmission operation can be saved such that subsequent transmissions have at their disposal a large SPT which defines segments in a plurality of files on the receiving computer. Similar segments which could be identified in a number of different files on the receiving computer could then be used to speed the transmission of one new file. That is the copy of the new file would be made from segments which are identified in a number of files on the receiving computer.

While in the preferred embodiment described above, a file of the type used in DOS based computers was transferred from computer 1 to computer 2, it should be understood that in alternative embodiments, the invention could be used to transfer other types of "files" between computers. For example the invention could be used to transfer a particular string of bytes from one computer to a second computer. Thus, it should be understood that the present invention can be used to transfer any string of bytes (herein termed a "file") from one computer to a second computer.

It is noted that herein computer 2 divides file 23 into segments and calculates a CRC for each such segment, while computer 1, calculates a CRC for each possible segment, i.e each 128 byte segment following each byte in the file. It is noted that in alternative embodiments, computer two could also calculate hash numbers for segments starting a various points in the file or computer 1 could calculate CRC numbers by first dividing the file into fixed length segments and later going back and re-dividing the file into segments starting at different places in the file.

## Claims

1. A method of transferring a particular string of bytes from a first computer (1) to a second computer (2), said second computer (2) having therein a second string of bytes, said method comprising the steps of analyzing said second string and generating a hash number for segments thereof, determining parts of the particular string that are different from the second string using the hash numbers, transmitting these parts to the second computer (2) and combining at said second computer (2) the parts of said particular string that were transmitted with designated parts of the second string to construct a replica of said particular string, characterized by transferring said hash numbers to said first computer (1) and storing them in a table, analyzing said particular string to determine segments thereof that have hash numbers corresponding to hash numbers in said table, segments in said particular string which have hash numbers corresponding to hash numbers in said table comprising a first set of segments, sending to the second computer (2) those parts of the first string which are not part of any segment in said first set of segments, and sending to the second computer (2) an indication of the segments that are in said first set of segments.

2. The method of claim 1, characterized by using as said table a Segment Profile Table, or SPT, having a list of segments and an indication of the hash number for each segment in the list of segments.

3. The method of claim 1 or 2, characterized by using cyclical redundancy check, or CRC, numbers as said hash numbers.

4. The method of one of the claims 1 to 3, characterized by using a new string as said particular string.

5. The method of one of the claims 1 to 4, characterized by sending the name of said particular string from said first computer (1) to said second computer (2).

6. The method of claim 5, wherein said second computer (2) has stored therein a plurality of strings, characterized by selecting a string at said second computer (2) which forms said second string.

7. The method of claim 6, characterized by basing said selection on the name of said particular string which was sent form said first computer (1) to said second computer (2).

8. The method of one of the claims 1 to 7, characterized by using a particular file (13) as the particular string of bytes and a second file (23) as the second string of bytes.

9. A system for transferring a particular string of bytes from a first computer (1) to a second computer (2), said second computer (2) having therein a second string of bytes, said system comprising means for analyzing said second string and generating a hash number for each segment thereof, means for determining parts of the particular string that are different from the second string using the hash numbers, means (3, 7) for transmitting these parts to the second computer (2) and means for combining at said second computer (2) the parts of said particular string that were transmitted with designated parts of the second string to construct a replica of said particular string, characterized by means for transferring said hash numbers to said first computer and storing them in a table, means for analyzing said particular string to determine segments thereof that have hash numbers corresponding to hash numbers in said table, segments in said particular string which have hash numbers corresponding to hash numbers in said table comprising a first set of segments, means for sending to the second computer (2) those parts of the first string which are not part of any segment in said first set of segments, and means for sending to the second computer (2) an indication of the segments that are in said first set of segments.

10. The system of claim 8, characterized in that said hash numbers are cyclical redundancy check, or CRC, numbers.

11. The system of claim 9 or 10, characterized in that the particular string of bytes is a particular file (13) and the second string of bytes is a second file (23).

## Patentansprüche

1. Verfahren zum Übertragen eines bestimmten Byte-Strings von einem ersten Computer (1) an einen zweiten Computer (2), wobei der zweite Computer (2) einen zweiten Byte-String besitzt, wobei das Verfahren die Schritte des Analysierens des zweiten Strings und des Erzeugens einer Hash-Zahl für Segmente dieses zweiten Strings, des Bestimmens von Teilen des bestimmten Strings, die von dem zweiten String verschieden sind, unter Verwendung der Hash-Zahlen, des Sendens dieser Teile an den zweiten Computer (2) und des Kombinierens der Teile des bestimmten Strings, die mit bezeichneten Teilen des zweiten Strings gesendet wurden, im zweiten Computer (2), um eine Kopie des bestimmten Strings zu konstruieren, umfaßt, gekennzeichnet durch das Übertragen der Hash-Zahlen an den ersten Computer (1) und das Speichern der Hash-Zahlen in einer Tabelle, das Analysieren des bestimmten Strings, um Segmente des bestimmten Strings zu bestimmen, die Hash-Zahlen besitzen, die den Hash-Zahlen in der Tabelle entsprechen, wobei Segmente in dem bestimmten String, die Hash-Zahlen besitzen, die den Hash-Zahlen in der Tabelle entsprechen, eine erste Menge von Segmenten umfassen, das Senden jener Teile des ersten Strings, die nicht Teil irgendeines Segments in der ersten Menge von Segmenten sind, an den zweiten Computer (2), und das Senden einer Angabe der Segmente, die in der ersten Menge von Segmenten liegen, an den zweiten Computer (2).

2. Verfahren nach Anspruch 1, gekennzeichnet durch das Verwenden einer Segmentprofiltabelle oder SPT, die eine Liste von Segmenten und eine Angabe der Hash-Zahl für jedes Segment in der Liste von Segmenten besitzt, als die Tabelle.

3. Verfahren nach Anspruch 1 oder Anspruch 2, gekennzeichnet durch das Verwenden von Zahlen einer zyklischen Redundanzprüfung oder CRC-Zahlen als die Hash-Zahlen.

4. Verfahren nach einem der Ansprüche 1 bis 3, gekennzeichnet durch das Verwenden eines neuen Strings als den bestimmten String.

5. Verfahren nach einem der Ansprüche 1 bis 4, gekennzeichnet durch das Senden des Namens des bestimmten Strings vom ersten Computer (1) zum zweiten Computer (2).

6. Verfahren nach Anspruch 5, bei dem im zweiten Computer (2) mehrere Strings gespeichert sind, gekennzeichnet durch das Auswählen eines Strings im zweiten Computer (2), der den zweiten String bildet.

7. Verfahren nach Anspruch 6, dadurch gekennzeichnet, daß die Auswahl anhand des Namens des bestimmten Strings, der vom ersten Computer (1) an den zweiten Computer (2) geschickt wurde, erfolgt.

8. Verfahren nach einem der Ansprüche 1 bis 7, gekennzeichnet durch das Verwenden einer bestimmten Datei (13) als den bestimmten Byte-String und einer zweiten Datei (23) als den zweiten Byte-String.

9. System zum Übertragen eines bestimmten Byte-Strings von einem ersten Computer (1) an einen zweiten Computer (2), wobei der zweite Computer (2) einen zweiten Byte-String besitzt, wobei das System eine Einrichtung zum Analysieren des zweiten Strings und zum Erzeugen einer Hash-Zahl für jedes Segment des zweiten Strings, eine Einrichtung zum Bestimmen von Teilen des bestimmten Strings, die von dem zweiten String verschieden sind, unter Verwendung der Hash-Zahlen, eine Einrichtung (3, 7), die diese Teile an den zweiten Computer (2) sendet, sowie eine Einrichtung zum Kombinieren der Teile des bestimmten Strings, die mit bezeichneten Teilen des zweiten Strings gesendet wurden, im zweiten Computer (2), um eine Kopie des bestimmten Strings zu konstruieren, umfaßt, gekennzeichnet durch eine Einrichtung zum Übertragen der Hash-Zahlen an den ersten Computer und zum Speichern der Hash-Zahlen in einer Tabelle, eine Einrichtung zum Analysieren des bestimmten Strings, um Segmente des bestimmten Strings zu bestimmen, die Hash-Zahlen besitzen, die Hash-Zahlen in der Tabelle entsprechen, wobei Segmente in dem bestimmten String, die Hash-Zahlen besitzen, die Hash-Zahlen in der Tabelle entsprechen, eine erste Menge von Segmenten umfassen, eine Einrichtung zum Senden jener Teile des ersten Strings, die nicht Teil irgendeines Segments in der ersten Menge von Segmenten sind, an den zweiten Computer (2), und eine Einrichtung zum Senden einer Angabe der Segmente, die in der ersten Menge von Segmenten enthalten sind, an den zweiten Computer(2).

10. System nach Anspruch 8, dadurch gekennzeichnet, daß die Hash-Zahten Zahlen für eine zyklische Redundanzprüfung oder CRC-Zahlen sind.

11. System nach Anspruch 9 oder 10, dadurch gekennzeichnet, daß der bestimmte Byte-String eine bestimmte Datei (13) ist und der zweite Byte-String eine zweite Datei (23) ist.

## Revendications

1. Procédé de transfert d'une chaîne d'octets particulière à partir d'un premier ordinateur (1) vers un second ordinateur (2), ledit second ordinateur (2) contenant une seconde chaîne d'octets, ledit procédé comprenant les étapes d'analyse de ladite seconde chaîne et de production d'une somme de contrôle pour ses segments, de détermination de parties de la chaîne particulière qui sont différentes de la seconde chaîne en utilisant les sommes de contrôle, de transmission au second ordinateur (2) et d'association, sur ledit second ordinateur (2), des parties de ladite chaîne particulière qui ont été transmises avec des parties désignées de la seconde chaîne afin de construire une copie de ladite chaîne particulière, caractérisé par le transfert desdites sommes de contrôle vers ledit premier ordinateur (1) et leur mémorisation dans une table, l'analyse de ladite chaîne particulière afin de déterminer des segments de celle-ci qui présentent des sommes de contrôle correspondant aux sommes de contrôle dans ladite table, des segments de ladite chaîne particulière qui présentent des sommes de contrôle correspondant aux sommes de contrôle de ladite table comprenant un premier jeu de segments, l'envoi au second ordinateur (2) de ces parties de la première chaîne qui ne constituent pas une partie d'un segment quelconque dudit premier jeu de segments, et l'envoi au second ordinateur (2) d'une indication sur les segments qui sont présents dans ledit premier jeu de segments.

2. Procédé selon la revendication 1, caractérisé par l'utilisation, pour ladite table, d'une table de profil de segment, ou SPT, comportant une liste de segments et une indication de la somme de contrôle pour chaque segment de la liste de segments.

3. Procédé selon la revendication 1 ou 2, caractérisé par l'utilisation de nombres de contrôle cyclique par redondance , ou CRC pour lesdites sommes de contrôle.

4. Procédé selon une des revendications 1 à 3, caractérisé par l'utilisation d'une nouvelle chaîne pour ladite chaîne particulière.

5. Procédé selon une des revendications 1 à 4, caractérisé par l'envoi du nom de ladite chaîne particulière à partir dudit premier ordinateur (1) vers ledit second ordinateur (2).

6. Procédé selon la revendication 5, dans lequel ledit second ordinateur (2) mémorise une pluralité de chaînes, caractérisé par la sélection d'une chaîne sur ledit second ordinateur (2) qui forme ladite seconde chaîne.

7. Procédé selon la revendication 6, caractérisé par le fait que ladite sélection est basée sur le nom de ladite chaîne particulière qui a été envoyée à partir dudit premier ordinateur (1) vers ledit second ordinateur (2).

8. Procédé selon une des revendications 1 à 7, caractérisé par l'utilisation d'un fichier particulier (13) pour la chaîne d'octets particulière et d'un second fichier (23) pour la seconde chaîne d'octets.

9. Dispositif destiné transférer une chaîne d'octets particulière à partir d'un premier ordinateur (1) vers un second ordinateur (2), ledit second ordinateur (2) contenant une seconde chaîne d'octets, ledit dispositif comprenant un moyen destiné à analyser ladite seconde chaîne et à produire une somme de contrôle pour chacun de ses segments, un moyen destiné à déterminer des parties de la chaîne particulière qui sont différentes de la seconde chaîne en utilisant les sommes de contrôle, un moyen (3, 7) destiné à transmettre ces parties au second ordinateur (2) et un moyen destiné à associer, sur ledit second ordinateur (2), les parties de ladite chaîne particulière qui ont été transmises avec des parties désignées de la seconde chaîne afin de construire une copie de ladite chaîne particulière, caractérisé par un moyen destiné à transférer lesdites sommes de contrôle audit premier ordinateur et à les mémoriser dans une table, un moyen destiné à analyser ladite chaîne particulière afin de déterminer des segments de celle-ci qui présentent des sommes de contrôle correspondant aux sommes de contrôle de ladite table, des segments dans ladite chaîne particulière qui présentent des sommes de contrôle correspondant aux sommes de contrôle de ladite table comprenant un premier jeu de segments, un moyen destiné à envoyer au second ordinateur (2) celles des parties de la première chaîne qui ne constituent pas une partie d'un segment quelconque dudit premier jeu de segments, un moyen destiné à envoyer au second ordinateur (2) une indication sur les segments qui sont présents dans ledit premier jeu de segments.

10. Dispositif selon la revendication 9, caractérisé en ce que lesdites sommes de contrôle sont des nombres de contrôle cyclique par redondance, ou CRC.

11. Dispositif selon la revendication 9 ou 10, caractérisé en ce que la chaîne d'octets particulière est un fichier particulier (13) et la seconde chaîne d'octets est un second fichier (23).
